Europäisches Patentamt

European Patent Office

Office européen des brevets

(11) Publication number: **0 113 736**
**B1**

(12) **EUROPEAN PATENT SPECIFICATION**

(45) Date of publication of patent specification: **17.11.88**

(21) Application number: **83902118.5**

(22) Date of filing: **07.07.83**

(86) International application number:
**PCT/HU83/00037**

(87) International publication number:
**WO 84/00423 02.02.84 Gazette 84/03**

(51) Int. Cl.⁴: **G 01 V 3/11**

(54) **A METHOD AND APPARATUS FOR DETERMINING THE TRACE AND DEPTH OF UNDERGROUND METALLIC CONDUCTORS.**

(30) Priority: **09.07.82 HU 223882**

(43) Date of publication of application:
**25.07.84 Bulletin 84/30**

(45) Publication of the grant of the patent:
**17.11.88 Bulletin 88/46**

(84) Designated Contracting States:
**AT BE CH DE FR GB LI NL SE**

(56) References cited:
**FR-A-2 333 256**
**GB-A-1 488 847**
**GB-A-1 577 742**
**SU-A- 355 590**
**SU-A- 957 141**
**US-A-3 617 865**
**US-A-3 988 663**
**US-A-4 295 095**

(73) Proprietor: **Szedlmajer, Lászlo**
**Zolyomi ut 29. I/6**
**H-1112 Budapest (HU)**

(72) Inventor: **Szedlmajer, Lászlo**
**Zolyomi ut 29. I/6**
**H-1112 Budapest (HU)**

(74) Representative: **Prüfer, Lutz H., Dipl.-Phys.**
**Harthauser Strasse 25d**
**D-8000 München 90 (DE)**

Courier Press, Leamington Spa, England.

## Description

The subject matter of the present invention is a method and an apparatus for determining the horizontal position and the depth of metallic conductors in accordance with the preamble of claims 1 and 7, respectively.

Such a method and apparatus is known from the US—A—4,295,095. A method is described for sensing buried metal conductors. Two antennas are provided being arranged at an upper and a lower level. The output signals are compared and subtracted from each other. The antennas are connected to amplifiers which again are connected to filters. The antennas are rigidly positioned horizontally. Therefore only one component of the magnetic field can be sensed. Four antennas are necessary to determine the maximum field strength with some reliability.

In the GB—A—1,488,847 the detection of an electrical conductor with variable currents is described. An induction coil is moved relatively to the conductor whereby currents are induced in the induction coil. These are amplified. In particular higher harmonics are amplified. Only one antenna is for sensing, therefore the depth of the conductor cannot be detected.

The US—A—3,988,663 describes an apparatus for detecting buried metal pipes. Upper harmonics of a 60 Hz base frequency are used. The position of the metal pipe is determined in sensing the maximum of the AC signal. No components of the generated magnetic field are detected. Only one antenna is used so that it is difficult to determine the depth of the pipe.

Surveying and registering a densely located system of public utilities raises a lot of problems, as by applying the known methods the determination of the horizontal position and of the depth can be accomplished with a relatively low accuracy only, especially in a very "noisy" environment, namely in the vicinity of power current lines and equipments, e.g. tramway and trolley lines. The handling of the known equipment is sometimes difficult, portable constructions are not available, and the result of the measurements may be deteriorated by significant human errors.

A general method of locating metallic conductors is to indicate the variations of the vertical and/or horizontal components of the magnetic field generated by the alternating current existing in said conductor by means of a suitable probe, usually a transducer comprising ferrite antennas. The alternating current is produced by a generator applied to input an alternating current of the required amplitude and frequency to the conductor to be located via its available points. The input can also be accomplished by means of inductivity. A common method is also to connect one pole of the generator to the conductor only, the other pole being grounded.

The locating accomplished by the method described is based on the fact that if the conductor to be located can be considered as an infinite straight lead, then a concentric magnetic field can be supposed to be existing around it. In the case of such a field pattern the vertical and horizontal components of the magnetic field strength are equal if the lead can be seen at an angle of 45° from the point of the measurements. Thereby the direction of the arrangement of the conductor can be determined, while the horizontal position of the conductor can be theoretically established based on the maximum value of the horizontal component and the zero level of the vertical component. Both measurements are, however, uncertain; the measurement of the maximum value may be burdened by serious human errors, and measuring the zero value is illusory, especially in noisy environment. An equipment has been developed by the US company Metrotech utilizing a microcomputer to realize the locating method described wherein the measuring process is based on a fix program.

Equipments developed to accomplish the method described above are known from the German Patent Specifications DE-PS 10 64 655, 25 28 511 or 20 37 865 on circuit level. The solution of particular partial problems are given in these Patent Specifications to increase the accuracy or stability of the detection or to accomplish an energy saving construction of the generator (powering the generator from the conductor to be located is recommended by one of these specifications).

An apparatus is described in the German Patent Specification No. 955 348 comprising two coils arranged horizontally one above the other and in a fixed position with respect to each other to find the depth, while a separate antenna is provided to localize the horizontal position which is also rigidly fixed in relation to the coils. This apparatus requires a careful calibration when used.

In noisy environments, applying the generator raises particular problems, as 100 to 500 W high-power units are used in attempting to generate a high level alternating current in the conductor sufficient to suppress the effect of the own current of the conductor considered to be disturbing. The power requirement of this accomplishment to very high, developing a mobile equipment is difficult and the generator must be carefully matched for the measurements.

A source of additional difficulties is the measuring frequency, the selection of which can be commonly considered as incidental, it is an odd-order multiple of the mains frequency or approximates this value (e.g. 1450 Hz in the case of the instrument of the SEBA company, or 1030 Hz in the RFT equipment), thereby a sufficiently selective measurement cannot be always effected, the relative value of the noise may be significant.

The object of the invention is to eliminate the disadvantages describsd above; in particular the horizontal position and the depth of the conductor is to determine easily with the use or without the use of an auxiliary AC generator.

This object is solved by a method and by an apparatus for determining the horizontal position and depth of underground metallic conductors as initially described which are characterized by the features of claims 1 and 7, respectively.

The method and apparatus are exemplified by the embodiments and implementations described in detail referring to the drawings, where

Fig. 1 is an illustration of the method;

Fig. 2 is a schematic block diagram of the apparatus;

Fig. 3 is the block diagram of the measuring receiver;

Fig. 4 is the circuit diagram of the band-pass filter in the measuring receiver;

Fig. 5 is a circuit diagram the active rectifier circuit and logarithmic amplifier built of operational amplifiers; and

Fig. 6 is a preferred circuit accomplishment of the current generator developed for the generator made of operation of the apparatus.

When implementing the method an easily available point of the conductor to be located is first connected to a generator inducing alternating current, if required. Either galvanic or inductive coupling may be applied. When a current is flowing in the conductor then the strength of the magnetic field induced may be sufficient to effect the measurements. By applying a referenc voltage it can be determined whether the magnetic field strength is sufficient or not, if required.

Two ferrite antennas are used for the measurements, two band-pass filters are built of them, one of each. The resonance frequency of the band-pass filters is selected, as a generator is or is not applied for the mesaurement. In the latter case an odd, preferably 47-th, and in the former case an even, preferably 48-th upper harmonic of the basic frequency is selected. These values for the upper harmonics are obtained from theoretical considerations relating to the determination of the layout of said conductors.

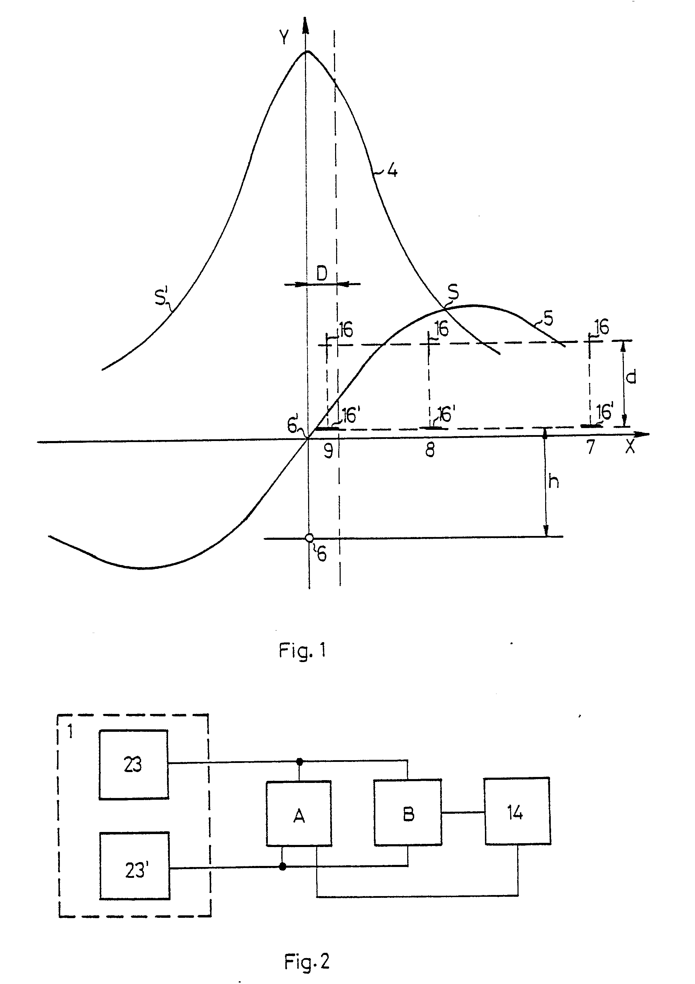

For the proper measuring the upper ferrite antenna 16 is first set in vertical position and below it the lower ferrite antenna 16' is set in horizontal position. Naturally a reverse arrangement can also be applied. The measurement is theoretically based on the fact the variations of the horizontal (x-axis) component 4 and the vertical (y-axis) component 5 of the magnetic field generated around a conductor 6 positioned in a depth in the relation to the lower, in this case horizontal, ferrite antenna 16' are different (see Fig. 1). The horizontal (x-axis) component 4 forms a bell curve, while the vertical (y-axis) component 5 forms an S-curve. Considering the difference of height d between the two positions where the two different components are measured, the two curves can be illustrated as seen in Fig. 1. The two curves are intersecting in point S, the peak of the component 4 is at x=0, that is at the horizontal position of the conductor to be located. In relation to the point S in one direction, here in the direction of increasing x values the component 5 are higher, and in the other direction the component 4 is the higher one. As for the absolute value of the component 5, in the other branch of the component 4 point S' is obtained as a similar limit.

When locating the conductor 6, the horizontal position 6' of the conductor is approximated and a measurement is made at point 7. Here the component 5 is higher than component 4 (if the measurement is made by approximating from point S', then the absolute value of the component 5 is to be considered). The quotient of the two positive values, preferably the logarithm formed from the quotient is computed. Out of the range between S' and S, the value of this logarithm is either positive or negative depending on the formation of the quotient. At points S' and S the value of the quotient equals 1, that of the logarithm equals 0, and following this the sign of the logarithm will reverse in the range from S' to S. Thereby the limits are assigned within which the locating is to be made with an increased accuracy. The next measurement is made at point 8 and is continued so that the results of the measurements should be of higher and higher value with the proper sign. In the vicinity of the horizontal position 6' of the conductor a corridor of D half-width is pointed out depending on the depth h, the limits of which are indicated by the value of the quotient or the logarithm exceeding a given value. Theoretically, the half-width D may be selected as small as desired, but because of the disturbing field always existing and resulting in a high distortion of the vertical (y-axis) component 5 here, measuring of the component 5 and thereby forming the quotient and its logarithm provides unreliable results within a specified range, as it has been already mentioned in connection with the known methods, too. When applying the method provided by the present invention, this range has been experienced to be smaller than 2 to 3 percents of the depth, what means that in the case of a depth of 1 m the horizontal position 6' can be localized with an accuracy of 2 to 3 cm with respect to the centerline of the conductor and this is quite sufficient.

At the limit of the corridor of half-width D the value of the quotient and the logarithm, respectively, attains a given limit value specified for example by the overflow of a visual display, and then the measuring is continued at point 9 by setting also the upper ferrite antenna 16 in horizontal position. Then, on the basis of the two horizontal (x-axis) components and the well known relations of the physics the depth of the conductor is determined and indicated preferably by analog computing methods based on the electronic circuits applied for locating the horizontal position 6'.

Several methods can be applied for indicating: visual, e.g. with arrows and/or digits, possibly displaying additional information, too, or acoustic, e.g. varying pitch of the tone and/or tone modulation, or both visual and acoustic, etc.

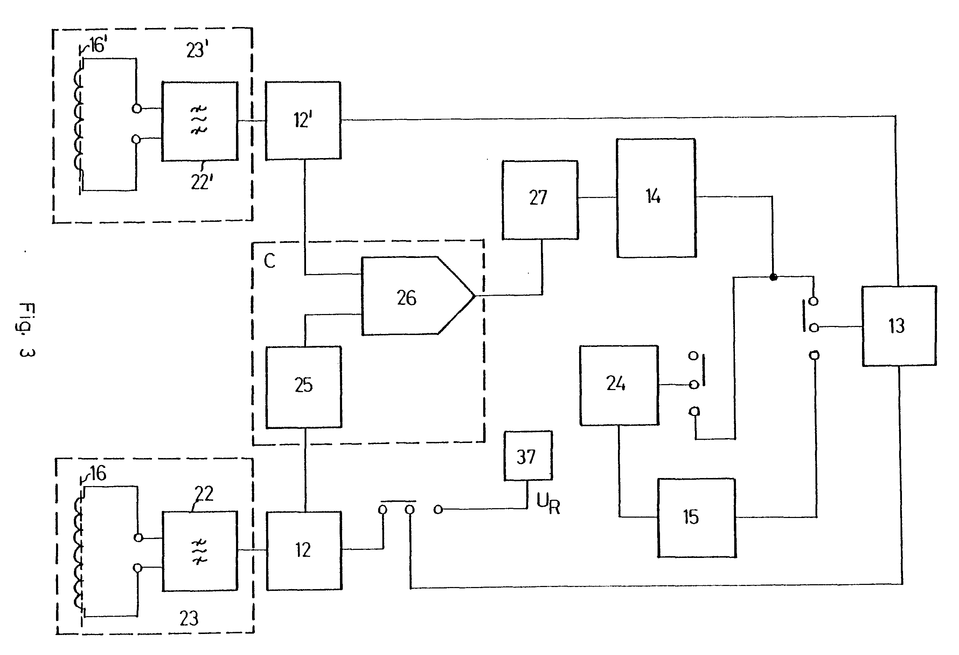

An apparatus suitable to implement the method is comprised of a measuring receiver and a generator applied when required. The schematic block diagram of the measuring receiver is shown in Fig. 2 and more detailed in Fig. 3. In the measuring receiver the transducer 1 comprises band-pass filters 23 and 23′ built of active and passive filter elements. Their output is connected to the horizontal-position-localizing unit A and the depth measuring unit B being connected to a display unit 14 (Fig. 2). The band-pass filters 23 and 23′ provide voltage signals corresponding to the field strength detected and this voltage signal is the basis of the measurements.

The upper 16 and lower 16′ ferrite antennas forming the inductive element sensing the magnetic field strength in the band pass filters 23 and 23′ accomplished with coupled parallel oscillating circuits are connected via the filter stages 22 and 22′ and operational amplifiers 12 and 12′ (formed as rectifiers) to the unit C which determines the position of the measuring receiver in relation to the conductor 6 to be located (see Fig. 3). The output of unit C is thereafter connected to the logic unit 27. The output of the logic unit 27 is connected to the indicator 14. The indicator 14 may be for example a unit providing acoustic and/or visual signals. One output of each operational amplifiers 12 and 12′ is connected to a logarithmic amplifier 13 being a fundamental part of the horizontal-position-localizing unit A. An alternately switchable modified exponential amplifier 15 and serially an analog divider 24 is connected to the logarithmic amplifier 13, the output of said divider being also connected to the indicator 14. The function of the modified exponential amplifier 15 is to restore the value logarithmized by the logarithmic amplifier 13 and to reduce the value obtained by 1. In breaking the interconnection between the operational amplifer 12 and the logarithmic amplifier 13 a reference voltage source 37 can be interposed applying a voltage of $U_r$ to the logarithmic amplifier 13. The reference voltage source 37 provides a basic for evaluating the measured magnetic field strength when necessary and makes possible to decide about the possible application of a generator (it is required for example when the conductors are densely laid side by side, the current flowing in the conductor to be located is small, etc.).

The unit C comprises in series connection a phase shifter 25 and a multiplier unit 26, where the phase shifter 25 is connected to the operational amplifier 12 and one output of the multiplier unit 26 is connected to the operational amplifier 12′.

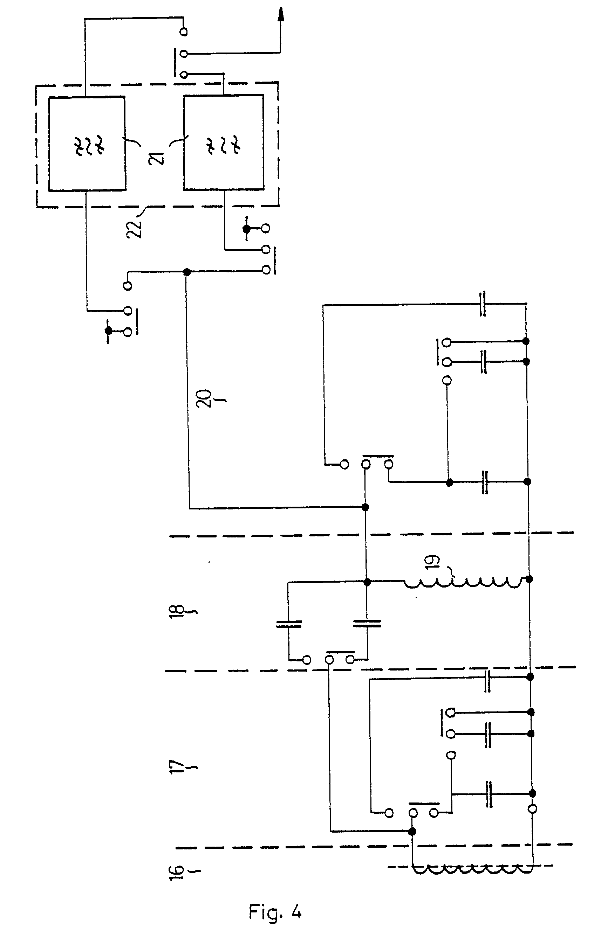

The band-pass filter 23 (see Fig. 4) comprises following the ferrite antenna 16 a tuning stage 17 including parallel capacitors switchable as required, a coupling stage 18 provided with an inductance 19 a capacitor unit 20, and an active filter stage 22 comprising active filter elements 21. The switchable capacitors of the coupling stage 18 provide for adjusting the tuning frequencies related to the operating modes with or without generator. The band-pass filter 23′ has a similar construction.

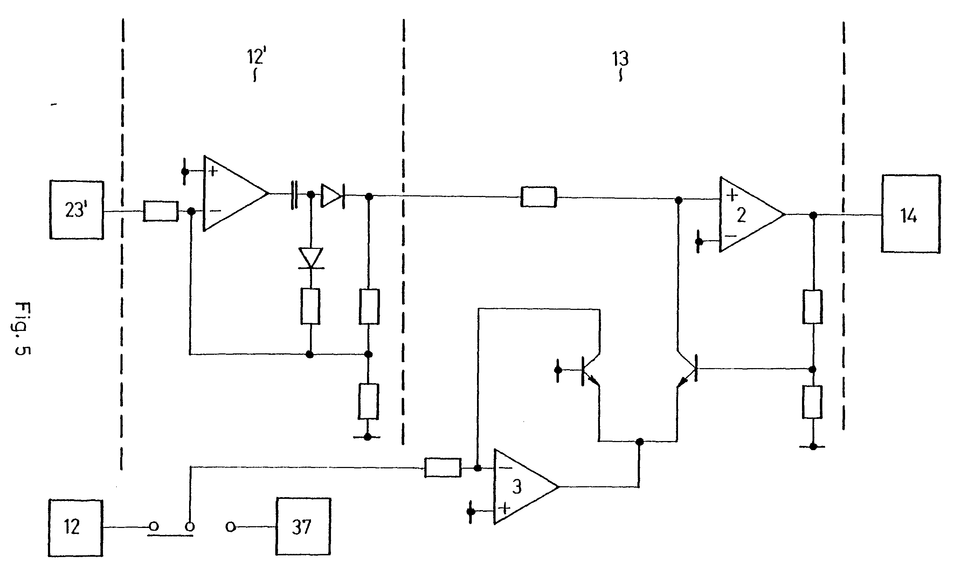

The circuit realization of the operational amplifier 12 applied as a rectifier (Fig. 5) is well known in itself and requires no comments. The band-pass filter 23′ is connected to the operational amplifier while the band-pass filter 23 is connected to the operational amplifier 12 being applied as a rectifier and having a similar construction, and both band-pass filters are so connected to the logarithmic amplifier 13. The logarithmic amplifier 13 is built of operational amplifiers 2 and 3, where the output of the operational amplifier 3 is fed back to its inverting input and the output of the operational amplifier is fed back to its noninverting output by a transistor each, the emitters of the two transistors being connected. Thereby the processing of the voltage signal is facilitated from the measuring point of view, and measured signal retains its sign relating to its natural value given in dBs.

The units described herein can also be accomplished in different ways by utilizing known circuits and elements.

When developing the apparatus and method one of the fundamental realizations was the fact, well known from the theory of rectifying circuits, that the $n = c.p \pm 1$ order upper harmonics exist in the current I of the p cycle rectifying circuit. Here the value of c is 1, 2, 3,..., while in the case of the practicable circuits p is 1, 2, 3, and 6. Considering these for example at the frequencies of the 24-th and 48-th upper harmonics, no upper harmonic exists at any value of p. Therefore these are preferable to be selected when a generator is applied. Because of the application of ferrite antennas and band-pass filters the 48th upper harmonic is more favourable. However, when a generator is not applied the 47th upper harmonic is always present and therefore the band-pass filters 23 and 23′ can be easily returned to the 47th upper harmonics with small auxiliary capacitors. The current obtained is only one 47th part of that obtained at the basic frequency, but it is measurable quite well.

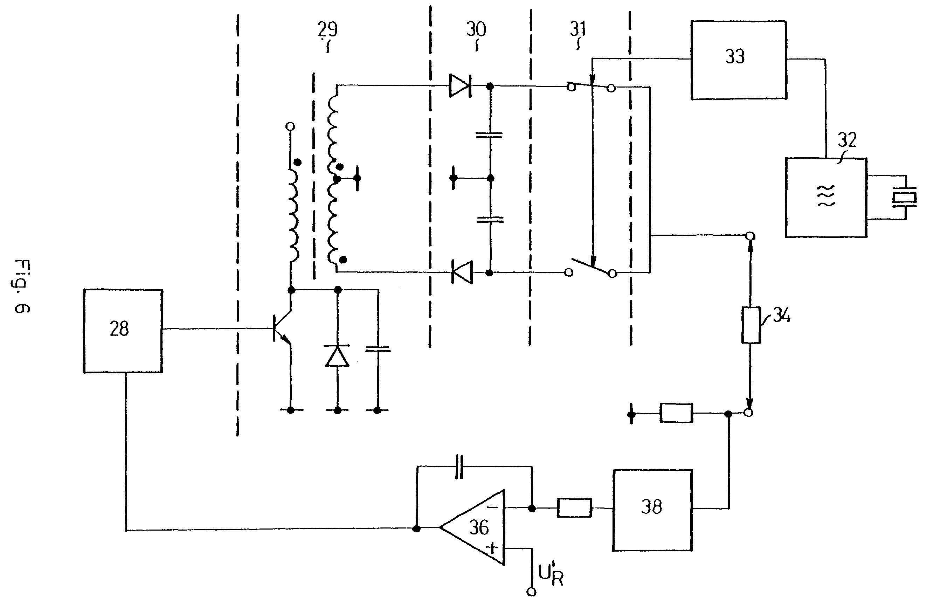

For the apparatus provided by the invention the generator is preferred to be realized as a current generator exemplified by the circuit diagarm shown in Fig. 6. In this case a transformer current-regenerative circuit 29 is connected to the output of a voltage-controlled oscillator 28 to drive the rectifier unit 30 and controlled switches 31. One pole of the loading 34 is connected to one pole of said switches, while the other pole is connected to the input of the voltage-controlled oscillator 28 via an operational amplifier 38 as a rectifier and an integrator 36. The controlled switch 31 is connected to a frequency divider 33 and a quartz-controlled oscillator 32. The inverting input of the integrator 36 is connected to a source providing a reference voltage $U'_R$.

The method and apparatus corresponding to the present invention provides for determining the horizontal position and depth of conductors conducting an alternating current with a high selectivity and accuracy.

## Claims

1. A method for determining the horizontal position and depth of an underground metallic conductor in which there exists an alternating current of a basic frequency which generates a corresponding magnetic field having horizontal and vertical components, comprising:

detecting the electromagnetic field by ferrite antennas at an upper and a lower level wherein the ferrite antennas are inductive elements of first and second band pass filter circuits, respectively; and

detecting the horizontal position of the conductor on the basis of the ratio of the outputs of the upper and lower ferrite antennas characterized in that

at least one of the ferrite antennas is rotatable in a vertical plane;

that the capacitance of such circuits is selected such that each of the circuits has a resonant frequency equal to the Nth upper harmonic of the basic frequency when a separated generator is not used to generate the alternating current in the conductor, and each of the circuits has a resonant frequency equal to the Mth upper harmonic of the basic frequency when a separate generator is used to generate the alternating current in the conductor, wherein

N is equal to $(cp \pm 1)$ or $(2c \pm 1)$,

M is equal to $cp$ or $2c$,

c is a properly selected integer greater than 1,

p is 1, 2, 3, or 6, and

the product $cp$ is an even number;

that the horizontal position of the conductor is determined from sensing the vertical component of the magnetic field at either one of the upper and the lower levels, sensing the horizontal component of the magnetic field at the other of the levels, and forming the ratio of the two sensed components; and

that the depth of the conductor is determined from sensing the horizonal component of the magnetic field at both the upper and lower levels.

2. The method of claim 1 wherein N is equal to $(cp-1)$ or $(2c-1)$.

3. The method of claim 1 or 2 wherein the horizontal position of the conductor is determined by moving in a direction determined by the sign of the logarithm of the absolute value of the quotient of the sensed vertical and horizontal components of the magnetic field to a corridor including the horizontal position of the conductor, the width of the corridor being determined by the magnitude of said absolute value.

4. The method of one of claims 1 to 3 wherein analog circuits are used to determine the depth of the conductor.

5. The method of one of claims 1 to 4 wherein the resonant frequency of each of the band pass filter circuits is equal to the 47th upper harmonic of the basic frequency when a separate generator is not used to generate the alternating current in the conductor.

6. The method of one of claims 1 to 4 wherein the resonant frequency of each of the band pass filter circuits is equal to the 48th upper harmonic of the basic frequency when a separate generator is used to generate the alternating current in the conductor.

7. Apparatus for determining the horizontal position and depth of an underground metallic conductor (6) in which there exists an alternating current of a basic frequency which generates a corresponding magnetic field having vertical (5) and horizontal (4) components, comprising:

a measuring receiver (1) comprising a transducer, having a first, upper ferrite antenna (16) and a second lower ferrite antenna (16') for converting the magnetic field strength into voltage signals;

a horizontal position locating unit (A) electrically connected to the transducer (1) for sensing the voltage signals corresponding to the magnetic field; characterized in that

at least one the ferrite antennas (16, 16') is rotatable in a vertical plane,

the horizontal position locating unit (A) points out of a corridor of a predetermined half-width (D) depending on the depth of the conductor (6), and

a depth measuring unit (B) is provided, having circuits electrically connected to the transducer for sensing the voltage signals corresponding to the magnetic field and for determining the depth of the conductor (6);

the transducer (1) comprising:

first and second band-pass filters (23, 23'), each having inductive elements (16, 16'), capacitive elements and filter elements, wherein the first, upper ferrite antenna (16) is an inductive element of the first filter (23) and the second lower ferrite antenna (16') is an inductive element of the second filter (22'), and the capacitive elements of the filters (22, 22') comprise capacitors selected such that the resonant frequency of both filters (22, 22') is the Nth harmonic of the basic frequency when a separate generator is not used to generate the alternating current in the conductor, and the resonant frequency of both filters (22, 22') is the Mth harmonic of the basic frequency when a separate generator is used to generate the alternating current in the conductor (6), wherein

N is equal to $(cp \pm 1)$ or $(2c \pm 1)$

M is a $cp$ or $2c$

c is a properly selected integer greater than 1

p is 1, 2, 3, or 6 and

the product $cp$ is an even number.

8. The apparatus of claim 7, characterized by first and second operational amplifiers (12, 12') each being applied as a rectifier,

wherein the input of the first amplifier (12) is connected to an active filter element which is the output stage of the first band-pass filter (22), the input of the second amplifier (12') is connected to an active filter element which is the output stage of the second band-pass filter, and the outputs of both amplifiers (12, 12') are connected to the horizontal position locating unit (A); and

characterized by passive filter elements in the first and second band-pass filters (23, 23').

9. The apparatus of claim 7 or 8, characterized by a unit (C) for determining the relative position of the measuring receiver with respect to the conductor (6), wherein the unit (C) comprises a two-input multiplier (26) and a phase shifter (25), wherein one input of the multiplier (26) is connected to the output of the first operational amplifier (12'), the other input of the multiplier (26) is connected to the output of the phase shifter (25), the input of the phase shifter (25) is connected with the output of the second operational amplifier (12), and the output of the multiplier (26) is connected through a logic unit (27) to an indicator (14).

10. The apparatus of one of claims 7 to 9 characterized in that the horizontal-position-locating unit (A) comprises:

a logarithmic amplifier (13) connected to the outputs of both the first and second operational amplifiers (12, 12') being applied as active rectifiers; and

the indicator (14), connected to the output of the logarithmic amplifier (13).

11. The apparatus of one of claims 7 to 10, characterized by a reference voltage source (31), wherein an input of the logarithmic amplifier (13) is switchable between the reference voltage source (31) and the output of the second operational amplifier (12).

12. The apparatus of one of claims 7 to 11, wherein the depth measuring unit (B) further comprises an exponential amplifier (15), the input of which is switchably connected to the output of the logarithmic amplifier (13), the output of the exponential amplifier (15) being connected to an analog divider (24) which is in turn serially connected to the indicator.

13. The apparatus of one of claims 10 to 12, wherein the logarithmic amplifier (13) comprises a transistor and a third operational amplifier, wherein the output of the third operational amplifier is connected to the base of the transistor and the non-inverting input of the third operational amplifier is connected to the collector of the transistor.

14. The apparatus of one of claims 7 to 13, characterized by a current generator for generating an alternating current in the underground conductor.

15. The apparatus of claim 14, wherein the current generator comprises:

a voltage-controlled oscillator (28), the output of which is connected to a transformer current-regenerative circuit (29), which is in turn connected to a rectifier (30), which in turn is connected to controlled switches (31), the outputs of which are connected to one pole of a load (34); and wherein another pole of the load (34) is connected to an operational amplifier (38) applied as an active rectifier which in turn is connected to the inverting input of an integrator (36) being connected to the input of the voltage-controlled oscillator (28).

**Patentansprüche**

1. Verfahren zum Bestimmen der horizontalen Lage und Tiefe eines unterirdischen metallischen Leiters, indem ein Wechselstrom mit einer Grundfrequenz vorliegt, der ein entsprechendes Magnetfeld mit horizontaler und vertikaler Komponente erzeugt, mit

Nachweisen des elektromagnetischen Feldes durch Ferritantennen auf einer oberen und unteren Höhenlage, wobei die Ferritantennen induktive Elemente mit erster bzw. zweiter Bandpaßfilterschaltung darstellen; und

Nachweisen der horizontalen Lage des Leiters auf der Grundlage des Verhältnisses der Ausgangssignale der oberen und unteren Ferritantenne;

dadurch gekennzeichnet, daß mindestens eine der Ferritantennen in einer vertikalen Ebene drehbar ist;

daß die Kapazität solcher Schaltungen so ausgewählt ist, daß jede der Schaltungen eine Resonanzfrequenz aufweist, die gleich der N-ten oberen Harmonischen der Grundfrequenz ist, wenn kein gesonderter Generator zum Erzeugen des Wechselstromes in dem Leiter benutzt wird, und daß jede der Schaltungen eine Resonanzfrequenz aufweist, die gleich der M-ten oberen Harmonischen der Grundfrequenz ist, wenn ein gesonderter Generator zum Erzeugen des Wechselstromes in dem Leiter benutzt wird, wobei

$N=(cp\pm1)$ oder $(2c\pm1)$ ist,

$M=cp$ oder $2c$ ist,

c eine geeignet gewählte ganze Zahl größer als 1 ist,

$p=1, 2, 3$ oder 6 ist und

das Produkt cp eine ganze Zahl ist;

daß die horizontale Lage des Leiters durch Erfassen der vertikalen Komponente des Magnetfeldes an einer der oberen oder unteren Höhenlage, durch Erfassen der horizontalen Komponente des Magnetfeldes an der anderen Höhenlage bestimmt wird; und daß die Tiefe des Leiters durch Erfassen der horizontalen Komponente des Magnetfeldes sowohl auf der oberen als auch unteren Höhenlage bestimmt wird.

2. Verfahren nach Anspruch 1, bei dem $N=(cp-1)$ oder $(2c-1)$ ist.

3. Verfahren nach Anspruch 1 oder 2, bei dem die horizontale Lage des Leiters bestimmt wird durch Bewegen in eine Richtung, die durch das Vorzeichen des Logarithmus des Absolutwertes des Quotienten der erfaßten vertikalen und horizontalen Komponente des Magenetfeldes bestimmt wird, zu einem Bereich, der die horizonale Lage des Leiters enthält, wobei die Größe des Bereiches durch die Größe des Absolutwertes bestimmt wird.

4. Verfahren nach einem der Ansprüche 1 bis 3, bei dem Analogschaltungen zur Bestimmung der Tiefe des Leiters benutzt werden.

5. Verfahren nach einem der Ansprüche 1 bis 4, bei dem die Resonanzfrequenz von jedem der Bandpaßfilterschaltungen gleich der 47sten oberen Harmonischen der Grundfrequenz ist, wenn kein gesonderter Generator zum Erzeugen des Wechselstromes in dem Leiter benutzt wird.

6. Verfahren nach einem der Ansprüche 1 bis 4, bei dem die Resonanzfrequenz von jedem der Bandpaßfilterschaltungen gleich der 48sten oberen Harmonischen der Grundfrequenz ist, wenn ein gesonderter Generator zum Erzeugen des Wechselstromes in dem Leiter benutzt wird.

7. Einrichtung zum Bestimmen der horizontalen Lage und Tiefe eines unterirdischen Metalleiters (6), indem ein Wechselstrom mit einer Grundfrequnz vorliegt, der ein entsprechendes Magnetfeld mit einer vertikalen (5) und einer horizontalen (4) Komponente erzeugt, mit

einem messenden Empfänger (1) der einen Meßwertaufnehmer mit einer ersten Ferritantenne (16) und einer zweiten Ferritantenne (16') zum Umwandeln der Magnetfeldstärke in Spannungssignale aufweist;

einer Einheit (A) zum örtlich Festlegen der horizontalen Lage, die elektrisch mit dem Meßwertaufnehmer (1) zum Erfassen der dem Magnetfeld entsprechenden Spannungssignale;

dadurch gekennzeichnet, daß mindestens eine der Ferritantennen (16, 16') in der vertikalen Ebene drehbar ist,

die Einheit (A) zum örtlichen Festlegen der horizontalen Lage einen Bereich mit einer vorbestimmten Halbwertbreite (D), die von der Tiefe des Leiters (6) abhängt, anzeigt, und

eine Tiefenmeßeinheit (B) vorgesehen ist, die elektrisch mit dem Meßwertaufnehmer zum Erfassen der Spannungssignale, die dem Magnetfeld entsprechen, und zum Bestimmen der Tiefe des Leiters verbundene Schaltungen aufweist;

wobei der Meßwertaufnehmer (1):

einen ersten und zweiten Bandpaßfilter (23, 23'), von denen jeder induktive Elemente (16, 16'), kapazitive Elemente und Filterelemente enthält, aufweist,

wobei die erste, obere Ferritantenne (16) ein induktives Element eines ersten Filters (22) und die zweite, untere Ferritantenne (16') ein induktives Element des zweiten Filters (22') darstellt, und

die kapazitiven Elemente der Filter (22, 22') so ausgewählte Kondensatoren aufweist, daß die Resonanzfrequenz beider Filter (22, 22') die N-te Harmonische der Grundfrequenz ist, wenn kein gesonderter Generator zum Erzeugen des Wechselstromes in dem Leiter benutzt ist,

und die Resonanzfrequenz beider Filter (22, 22') die M-te Harmonische der Grundfrequenz ist, wenn ein gesonderter Generator zum Erzeugen des Wechselstromes in dem Leiter (6) benutzt ist, wobei

$N = (cp \pm 1)$ oder $(2c \pm 1)$ ist,

$M = cp$ oder $2c$ ist,

$c$ eine geeignet gewählte ganze Zahl größer als 1 ist,

$p = 1, 2, 3$ oder 6 ist und

das Produkt $cp$ eine ganze Zahl ist.

8. Einrichtung nach Anspruch 7, gekennzeichnet durch einen ersten und zweiten Operationsverstärker (12, 12'), die beide als Gleichrichter eingesetzt sind,

wobei der Eingang des ersten Verstärkers (12) mit einem aktiven Filterelement verbunden ist, das die Ausgangstufe des ersten Bandpaßfilters (22) darstellt, der Eingang des zweiten Verstärkers (12') mit einem aktiven Filterelement verbunden ist, daß die Ausgangsstufe des zweiten Bandpaßfilters darstellt, und die Ausgänge beider Verstärker (12, 12') mit der Einheit (A) zum örtlichen Festlegen der horizontalen Lage verbunden sind; und

gekennzeichnet durch aktive Filterelemente in dem ersten und zweiten Bandpaßfilter (23, 23').

9. Einrichtung nach Anspruch 7 oder 8, gekennzeichnet durch eine Einheit (C) zum Bestimmen der relativen Lage des messenden Empfängers im Verhältnis zu dem Leiter (6), wobei die Einheit (C) einen Multiplizierer (26) mit zwei Eingängen und einen Phasenschieber (25) aufweist, wobei ein Eingang des Multiplizierers (26) mit dem Ausgang des ersten Operationsverstärkers (12') verbunden ist, der andere Eingang des Multiplizierers (26) mit dem Ausgang des Phasenschiebers (25) verbunden ist, der Eingang des Phasenschiebers (25) mit dem Ausgang des zweiten Operationsverstärkers (12) verbunden ist und der Ausgang des Multiplizierers (26) über eine Logikeinheit (27) mit einem Anzeiger (14) verbunden ist.

10. Einrichtung nach einem der Ansprüche 7 bis 9, dadurch gekennzeichnet, daß die Einheit (A) zum örtlichen Festlegen der horizontalen Lage,

einen logarithmischen Verstärker (13), der mit den Ausgängen sowohl des ersten als auch des zweiten Operationsverstärkers (12, 12'), die als aktive Gleichrichter eingesetz sind, verbunden ist; und

den Anzeiger (14), der mit dem Ausgang des logarithmischen Verstärkers (13) verbunden ist, aufweist.

11. Einrichtung nach einem der Ansprüche 7 bis 10, gekennzeichnet durch eine Referenzspannungsquelle (31), wobei ein Eingang des logarithmischen Verstärkers (13) zwischen der Referenzspannungsquelle (31) und dem Ausgang des zweiten Operationsverstärkers (12) schaltbar ist.

12. Einrichtung nach einem der Ansprüche 7 bis 11, bei dem die Tiefenmeßeinheit (B) weiterhin einen exponentiellen Verstärker (15) aufweist, dessen Eingang schaltbar mit dem Ausgang des logarithmischen Verstärkers (13) verbunden ist, wobei der Ausgang des exponentiellen Verstärkers (15) mit einem Analogdividierer (24) verbunden ist, der wiederum in Reihe mit dem Anzeiger verbunden ist.

13. Einrichtung nach einem der Ansprüche 10 bis 12, bei dem der logarithmische Verstärker einen Transistor und einen dritten Operationsverstärker aufweist,

wobei der Ausgang des dritten Operationsverstärkers mit der Basis des Transistors verbunden ist, und der nicht-invertierende Eingang des dritten Operationsverstärkers mit dem Kollektor des Transistors verbunden ist.

14. Einrichtung nach einem der Ansprüche 7 bis 13, gekennzeichnet durch einen Stromgenerator zum Erzeugen eines Wechselstromes in dem unterirdischen Leiter.

15. Einrichtung nach Anspruch 14, bei der der Stromgenerator einen spannungsgesteuerten Oszillator (28) aufweist, dessen Ausgang mit einer stromregenerierenden Wandlerschaltung (29) verbunden ist, die wiederum mit einem Gleichrichter (30) verbunden ist, der wiederum mit gesteuerten Schaltern (31) verbunden ist, deren Ausgänge mit einem Pol einer Last (34) verbunden sind;

und bei der der andere Pol der Last (34) mit einem Operationsverstärker verbunden ist, der als aktiver Gleichrichter eingesetzt ist, der wiederum mit dem invertierenden Eingang eines Integrators (36) verbunden ist, der mit dem Eingang des spannungsgesteuerten Oszillators (28) verbunden ist.

**Revendications**

1. Procédé pour déterminer la position horizontale et la profondeur d'un conducteur métallique souterrain parcouru par un courant alternatif de fréquence de base qui engendre un champ magnétique correspondant ayant des composantes horizontale et verticale, comprenant:

détecter le champ électromagnétique par des antennes en ferrite à des niveaux supérieur et inférieur, lesdites antennes étant constituées respectivement par des éléments inducteurs d'un premier et d'un second circuits de filtrage à bande passante et

détecter la position horizontale du conducteur à partir du rapport entre les signaux de sortie des antennes en ferrite supérieure et inférieure,

caractérisé en ce qu'au moins l'une des antennes en ferrite est rotative dans un plan vertical,

en ce que le capacité de ces circuits est choisie de manière que chacun des circuits ait une fréquence de résonance égale à la $N^{ème}$ harmonique supérieure de la fréquence de base lorsqu'un générateur séparé n'st pas utilisé pour générer le courant alternatif dans le conducteur, et chacun des circuits a une fréquence de résonance égale à la $M^{ème}$ harmonique supérieure de la fréquence de base lorsqu'un générateur séparé est utilisé pour générer le courant alternatif dans le conducteur,

N étant égale à (cp±1) ou (2c±1),

M est égal à cp ou 2c,

c est un nombre entier convenablement choisi supérieur à 1,

p est égal à 1, 2, 3, ou 6, et

le produit cp est un nombre pair;

en ce que la position horizontale du conducteur est déterminée en détectant la composante verticale du champ magnétique à l'un des niveaux supérieur et inférieur, en détectant la composante horizontale du champ magnétique à l'autre niveau, et en formant le rapport des deux composantes détectées; et

en ce que la profondeur du conducteur est déterminée en détectant la composante horizontale du champ magnétique à la fois au niveau supérieur et au niveau inférieur.

2. Procédé selon la revendication 1, caractérisé en ce que N est égal à (cp−1) ou (2c−1).

3. Procédé selon l'une des revendications 1 et 2, caractérisé en ce que la position horizontale du conducteur est déterminée en déplaçant dans une direction déterminée par le signe du logarithme de la valeur absolue du quotient des composantes verticale et horizontale du champ magnétique vers un intervalle incluant la position horizontale du conducteur, la largeur de l'intervalle étant déterminée par la grandeur de la valeur absolue.

4. Procédé selon l'une des revendications 1 à 3, caractérisé en ce que des circuits analogiques sont utilisés pour déterminer la profondeur du conducteur.

5. Procédé selon l'une des revendications précédentes, caractérisé en ce que la fréquence de résonance de chacun des circuits de filtrage à bande passante est égal à la $47^{ème}$ harmonique supérieure de la fréquence de base lorsqu'un générateur séparé n'est pas utilisé pour générer le courant alternatif dans le conducteur.

6. Procédé selon l'une des revendications 1 à 4, caractérisé en ce que la fréquence de résonance de chacun des circuits de filtrage à bande passante est égal à la $48^{ème}$ harmonique supérieure de la fréquence de base lorsqu'un générateur séparé est utilisé pour générer le courant alternatif dans le conducteur.

7. Appareil pour déterminer la position horizontale et la profondeur d'un conducteur métallique souterrain (6) parcouru par un courant alternatif de fréquence de base qui engendre un champ magnétique correspondant ayant des composantes verticale (5) et horizontale (4), du type comprenant un récepteur de mesure (1) comprenant un transducteur ayant une première antenne supérieure en ferrite (16) et une seconde antenne inférieure en ferrite (16′) pour convertir le champ magnétique en signaux de tension,

une unité de localisation de position horizontale (A) connectée électriquement au transducteur (1) afin de détecter les signaux de tension correspondant au champ magnétique;

caractérisé en ce qu'au moins l'une des antennes en ferrite (16, 16′) est rotative dans un plan vertical,

en ce que l'unité de localisation de position horizontale (A) fait ressortir un intervalle ayant une demi-largeur prédéterminée (D) dépendant de la profondeur du conducteur (6),

en ce qu'une unité de profondeur (B) est prévue avec des circuits reliés électriquement au transducteur pour détecter les signaux de tension correspondant au champ magnétique et pour déterminer la profondeur du conducteur (6),

ledit transducteur (1) comprenant un premier et un second filtres à bande passante (23, 23′) pourvus chacun d'éléments inducteurs (16, 16′), d'éléments capacitifs et d'éléments de filtrage, dans lesquels la première antenne supérieure en ferrite (16) est un élément inducteur du premier filtre (23) et la seconde antenne en ferrite inférieure (16′) est un élément inducteur du second filtre (22'), les éléments capacitifs des filtres (22, 22') comprenant des condensateurs choisis de manière que la fréquence de résonance des deux filters (22, 22') soient la N$^{\text{ème}}$ harmonique de la fréquence de base lorsqu'un générateur séparé n'est pas utilisé pour générer le courant alternatif dans le conducteur et la fréquence de résonance des deux filtres (22, 22') est la M$^{\text{ème}}$ harmonique de la fréquence de base lorsqu'un générateur séparé est utilisé pour générer le courant alternatif dans le conducteur (6),

N étant égal à (cp±1) ou (2c±1)

M est égal à cp ou 2c

c est un nombre entier convenablement choisi supérieur à 1,

p est égal à 1, 2, 3, ou 6 et

le produit cp est un nombre pair.

8. Appareil selon la revendication 7, caractérisé en ce qu'il comporte un premier et un second amplificateurs opérationnels (12, 12') utilisés chacun comme redresseur, l'entrée du premier amplificateur (12) étant reliée à un élément de filtrage actif qui est constitué par l'étage de sortie du premier filtre à bande passante (22), l'entrée du second amplificateur (12') étant connectée à un élément de filtrage actif constitué par l'étage de sortie du second filtre à bande passante, et les sorties des deux amplificateurs (12, 12') étant connectées à l'unité de localisation de position horizontale (A), et en ce que des éléments de filtrage passif sont prévus dans le premier et le second filtre à bande passante (23, 23').

9. Appareil selon l'une des revendications 7 et 8, caractérisé en ce qu'il comprend une unité (C) pour déterminer la position relative du récepteur de mesure par rapport au conducteur (6), ladite unité (C) comprenant un multiplicateur (26) à deux entrées et un décaleur de phase (25), une entrée du multiplicateur (26) étant reliée à la sortie du premier amplificateur opérationel (12'), l'autre entrée du multiplicateur (26) étant connectée à la sortie du décaleur de phase (25), l'entrée de ce dernier étant reliée à la sortie du second amplificateur opérationel (12), et la sortie du multiplicateur (26) étant reliée par l'intermédiaire d'une unité logique (27) à un indicateur (14).

10. Appareil selon l'une des revendications 7 à 9, caractérisé en ce que l'unité de localisation de position horizontale (A) comprend un amplificateur logarithmique (13) connecté aux sorties du premier et du second amplificateurs opérationels (12, 12') qui sont utilisés comme redresseurs actifs, et l'indicateur (14) connecté à la sortie de l'amplificateur logarithmique.

11. Appareil selon l'une des revendications 7 à 10, caractérisé en ce qu'il comporte une source de tension de référence (31), une entrée de l'amplificateur logarithmique (13) étant commutable entre la source de tension de référence (31) et la sortie du second amplificateur opérationel (12).

12. Appareil selon l'une des revendications 7 à 11, caractérisé en ce que l'unité de mesure de profondeur (B) comprend en outre un amplificateur exponentiel (15) dont l'entrée est reliée de façon commutable à la sortie de l'amplificateur logarithmique (13), la sortie de l'amplificateur exponentiel (15) étant connectée à un diviseur analogique (24) qui est à son tour relié en série à l'indicateur.

13. Appareil selon l'une des revendications 10 à 12, caractérisé en ce que l'amplificateur logarithmique (13) comprend un transistor et un troisième amplificateur opérationel, la sortie du troisième amplificateur opérationel étant connectée à la base du transistor et l'entrée non réversible du troisième amplificateur opérationel étant connectée au collecteur du transistor.

14. Appareil selon l'une des revendications 7 à 13, caractérisé en ce qu'il comporte un générateur de courant pour générer un courant alternatif dans le conducteur souterrain.

15. Appareil selon la revendication 14, caractérisé en ce que le générateur de courant comprend un oscillateur commandé par tension (28) dont la sortie est reliée à un circuit régénérateur transformateur de courant (29) qui est lui-même relié à un redresseur (30) à son tour connecté à des interrupteurs commandés (31) dont les sorties sont reliées à un pôle d'une charge (34), l'autre pôle de la charge étant relié à un amplificateur opérationel (38) utilisé comme redresseur actif et qui est à son tour connecté à l'entrée d'inversion d'un intégrateur (36) qui est relié à l'entrée de l'oscillateur commandé par tension (28).

Fig. 1

Fig. 2

1

Fig. 3

Fig. 4

Fig. 5

EP 0 113 736 B1

Fig. 6